Europäisches Patentamt

European Patent Office

Office européen des brevets

(19)

(11) Publication number: **0 174 711**
A1

# EUROPEAN PATENT APPLICATION

(12)

(21) Application number: 85303394.2

(22) Date of filing: 14.05.85

(51) Int. Cl.⁴: **C 09 D 9/04**
**B 41 N 3/06**

(30) Priority: 28.08.84 US 644843

(43) Date of publication of application:
19.03.86 Bulletin 86/12

(84) Designated Contracting States:
AT BE CH DE FR GB LI LU NL

(71) Applicant: VARN PRODUCTS COMPANY, INC.
175 Route 208
Oakland, NJ 07436(US)

(72) Inventor: Donoghue, John T.
589 Edison Road
Trumble Connecticut 06611(US)

(72) Inventor: Ludwig, Robert P.
226 Oakland Road
Maplewood New Jersey 07436(US)

(74) Representative: Warren, Anthony Robert et al,
BARON & WARREN 18 South End Kensington
London W8 5BU(GB)

(54) Biodegradable emulsion for removing printing ink from printing press component parts.

(57) The invention relates to a biodegradable emulsion for use in removing printing ink from printing press component parts, and an ecological method for using that composition. The emulsion contains 50-75% d-limonene, 25-50% water, 1-5% of a surfactant mixture made up of a hydrophilic surfactant and an oleophilic surfactant, and 0.5-2% emulsion stabilizer. Optional additives such as rust inhibitors, bactericides, metal affinity agents, ink cutting agents, dyes, and fragrances may also be added.

EP 0 174 711 A1

Croydon Printing Company Ltd

## BIODEGRADABLE EMULSION FOR REMOVING
## PRINTING INK FROM PRINTING PRESS COMPONENT PARTS

The present invention relates to a system for cleaning equipment used in the graphics art industry, and, more particularly, it relates to a biodegradable emulsion for use in removing printing ink, dust and other accumulated foreign particles from various printing press component parts.

For years, presses and other machinery in the pressroom have been cleaned by use of standard solvents. Organic liquids such as gasoline, benzene, toluene, kerosene and alcohol are commonly used. Aqueous emulsion-type cleaners, however, also find application, mostly because they are non-flammable and do not cause a swelling of rubber surfaces as the organic solvents do. However, many types of presses use an oily ink composition which cannot adequately be removed with aqueous based washes. Accordingly, standard organic liquid solvents remain the favorite in most pressrooms. Still, such solvents are not generally biodegradable and, therefore, present ecological problems.

In certain types of printing operations, specially formulated cleaning compositions are desirable. For example, specially formulated compositions are used in cleaning and conditioning lithographic plates. See, for instance, U.S. Patent No. 4,399,243 to Dixit which discloses a cleaner and scratch remover composition for lithographic plates in the form of an emulsion of an aqueous phase in a oil phase. The oil phase includes a mineral spirit solvent, an oleophilic acid and a surfactant; while the aqueous phase includes a hydrophilic synthetic desensitizer, a gum desensitizer, a desensitizing agent, a nitrate salt, and water. See, also, U.S. Patent No. 4,028,281 to Millard which discloses a lithographic plate treating solution wnich is capable of degreasing and hydrophilically sensitizing the metal surface. The aqueous solution of Millard contains a wetting agent, an alkali metal silicate, a ferric chelate of ethylene diamine tetra acetic acid, and an ink solvent.

Such compositions also present a disposal problem in that they are not biodegradable. Biodegradable cleaning compositions are known. See Dotolo British patent No. 1,603,047 which discloses cleaners containing d-limonene. But Dotolo does not disclose cleaning compositions for use in removing printing ink and accumulated foreign particles from printing press component parts. Therefore, the need exists for a biodegradable cleaning composition usable in the graphic arts industry.

Our copending E.P Appln. No. 84304489.2 (corresponding to U.S Appln. No. 588,852) meets that need by disclosing cleaning compositions containing d-limonene which are particularly suited for cleaning printing presses and an ecological method for cleaning printing ink and accumulated foreign particles from printing press component parts is claimed therein. The cleaning compositions disclosed in our copending application include water-based ones.  However, difficulties are encountered in producing single phase emulsion cleaners which have adequate shelf stabilities.

Accordingly, a further need exists for a storage stable biodegradable cleaning composition for removing printing ink from printing press component parts.

That need is met by the present invention, which provides a biodegradable emulsion whicn has shelf stabilities of 6-12 months, and which has all of the advantages of high quality, water-miscible lithographic blanket and printing press roller washes without requiring the user to add water to create a short-level emulsion. The emulsion comprises four major functional elements which are: d-limonene, water, a surfactant mixture of a hydrophilic surfactant, and an oleophilic surfactant, and an emulsion stabilizer.

The major ingredient is d-limonene, which is completely biodegradable since it is derived from distilled orange rind oil.  It is also a known citrus fragrance and a known soil and stain remover.  See, e.g., U.S. Patent No. 4,336,152 to Like which discloses a disinfectant/cleaner composition exhibiting reduced eye irritancy potential containing d-limonene along with a quarternary ammonium compound, a non-ionic surfactant, a phosphate builder, an eye irritancy reducing compound, water, and optionally a lower aliphatic alcohol.  See also Caskey U.S. Patent No. 4,362,638 which discloses a gelled laundry pre-spotter containing d-limonene along with a non-ionic surfactant, an isoparaffinic hydrocarbon solvent, n-butoxy propanol and water. Finally see, Dotolo British patent 1,603,047 which dicloses four basic types of cleaners: 1) hand and carpet cleaners containing 10-50% d-limonene, 3-18% surfactant and the remainder water; 2) glass and hard surface cleaners containing 10-50% d-limonene, 1-15% surfactant, 1-40% organic solvent and the remainder water; 3) office equipment cleaners containing 85-95% d-limonene and 2-15% organic solvent; and 4) oven and metal surface cleaners containing 10-50% d-limonene, 3-18% surfactant, water and an abrasive material.

While d-limonene is a known soil and stain remover and general purpose cleaner, prior to copending E.P. application No. 84304489.2, it is believed that it has not previously been used in cleaning compositions for removing printing ink and accumulated foreign particles from printing press component parts. And yet, is has been found to be particularly effective for that purpose, not only in terms of parts of relief and intaglio presses, but also for cleaning parts of planographic presses, such as lithographic plates, which are especially sensitive. Moreover, the residue from the cleaning operation may be ecologically disposed of since it is essentially completely biodegradable.

The d-limonene content in the emulsion of the present invention may vary from approximately 50-75% by volume, and preferably from 65-75%. The amount of water present may vary from approximately 25-50% by volume, and preferably from 25-30%.

The surfactants present are preferably added as a surfactant mixture of a hydrophilic surfactant and an oleophilic surfactant. The surfactant mixture may vary from approximately 1-5% by volume, with the hydrophilic surfactant being 0.5-2.5% and the oleophilic surfactant being 0.5-2.5%. Preferably, 0.5-2.5% of a hydrophilic surfactant and 0.5-1.5% of an oleophilic surfactant make up the mixture for a total by volume in the emulsion of 1-4%.

The emulsion stabilizer is preferably a polypropylene glycol and may be present in the volume amount of 0.5-2%. The emulsion stabilizer, along with the surfactant mixture, makes possible a stable, storable emulsion which has a shelf-life of at least 6 months. This is particularly important for water-based washes used in the graphics art industry where pre-mixed cleaning compositions offer a distinct advantage to those which require emulsification.

Other optional portions of the emulsion may include an additive such as a rust inhibitor, a bactericide, a metal affinity agent, ink cutting agents, dye, a fragrance, or mixtures thereof. Preferably, approximately 0.01-0.1% of a rust inhibitor, 0.1-2% and, more preferably, 0.5% bactericide, and 0.1-1.0% of a metal affinity agent are added.

The emulsion is used by applying it to printing press component parts, such as the blanket or rollers, to be cleaned. This may be done by wiping it on with a rag or by spraying it on the part. As a result of the solvent/ cleansing action of the emulsion, a residue of used emulsion, removed ink, and accumulated foreign particles is formed. This may be removed by wiping with a rag or by rinsing into a liquid residue container. The residue may then be ecologically disposed of since it is, at least in part, biodegradable.

## Description of the Preferred Embodiments

As mentioned, the d-limonene component is the main one in the present emulsion. It is derived from distilled orange rind oil and may be obtained in essentially pure form from The Coca-Cola Co. Foods Div., Houston, Texas; Sunkist Growers, Inc., Sherman Oakes, California, or other citrus products companies which produce it as a by-product. It may be present in the emulsion in volume amounts ranging from 50-75% and preferably 65-75%. Since the solvent present in the emulsion is water, the emulsion is essentially completely biodegradable.

Also present is a surfactant mixture in the volume amount of 1-5%. Of that, 0.5-2.5% and preferably 1-2.5% is a hydrophilic solvent which may preferably be a non-ionic surfactant. Surfactants of this type include nonyl phenol polyethoxylates such as Igepal CO-630 from GAF Corporation; isooctyl phenoxy polyethoxy ethanols such as the Triton compounds of Rohm and Haas Company; non-ionic N-substituted fatty acid amides having polyoxythylene substituents such as the Ethonid surfactants of Armour; mixtures of sodium salts of sulfated fatty alcohols, including Duponal surfactants of DuPont Company; modified alkanol amides such as Richamide from the Richardson Company; and benzene sulfonate non-ionic surfactants such as isopropylamine dodecyl benzene sulfonate.

The oleophilic surfactant present in the mixture is 0.5-2.5%, and preferably 0.5-1.5% of a non-ionic or cationic surfactant. Non-ionic surfactants of this type include nonyl phenol polyethoxylates such as Igepal CA-620, Igepal CA-630, Igepal CO-210, Igepal CO-430, Igepal CO-520, and Igepal CO-530 from GAF Corporation. Cationic surfactants include polysorbates such as S-Maz-80 from Mazer Chemicals of Gurnee, Illinois.

Another ingredient in the emulsion is a polyol emulsion stabilizer that is useful in reducing the need to agitate the emulsion prior to use in order to reform it. Polyglycols such as polypropylene glycol are preferred. The emulsion stabilizer is preferably present in the volume amount of 0.5-2.0%.

Optional ingredients include: 0.01-0.1% of a rust inhibitor such as polyethoxylated amines available as Heterene T-5 from Heterene Chemical Co. or sodium nitrate; bactericides including quaternary ammonium compounds such as Araquod or 2C-75 from Armour of Chicago, Illinois, and butyl hydroxy toluene compounds present in the volume amount of 0.1-2% and preferably 0.5%; 0.1-1.0% metal affinity agents such as monoisopropanol amine, morpholine, triethanolamine; and ink cutting agents including esters of sulfonated dicarboxylic acid such as Aerosol OT from American Cyananid and sodium alkyl ether sulfate such as Steol KS-460 from Stepan Chemical Co. of Chicago, Illinois.

Optional ingredients include trace amounts of a dye such a Oil Yellow NB from DuPont Co. of Wilmington, Delaware or other known dyes; a fragrance such as Synfleur/M-1117 from Synfleur Div. of Bell Flavors & Fragrances, Inc., of Paramus, New Jersey, or other fragrances. Other conventional trace additives may also be added.

The result is an ecological emulsion particularly adapted for removal of printing ink and accumulated foreign particles from printing press component parts. It may be used on rubber or synthetic blankets and rollers, or metal rollers, and on other printing press component parts that require ink removal. Following use, the residue of used emulsion, removed ink, and accumulated foreign particles may be ecologically disposed of since the emulsion is, at least in part, biodegradable.

The following nonlimiting example is illustrative of the practice of the invention.

### Example

| Component | Volume % |
|---|---|
| d-limonene | 70 |
| water | 25 |
| hydrophilic surfactant[1] | 1.5 |
| oleophilic surfactant[2] | 1.0 |
| emulsion stabilizer[3] | 2.0 |
| bactericide[4] | 0.5 |

1) Igepal CO-630 from GAF Corp., New York, New York
2) Igepal CO-210 from GAF Corp., New York, New York
3) Polypropylene glycol
4) Araquod from Armour Co., Chicago, Illinois

The composition of the example was tested for its ability to remove printing ink and accumulated foreign particles from printing press component parts by wiping it on selected parts with a rag, wiping off the residue also with a rag, and inspecting the part for degree of ink removal. It was found particularly effective for removal of both oily and aqueous printing inks. The ability to remove oily printing inks is particularly surprising since no organic solvent is present in the emulsion.

The composition of the Example is also essentially completely biodegradable since no organic solvents are present. It is non-toxic and safe for pressroom use.

While the composition and method herein described constitute preferred embodiments of the invention, it is to be understooed that the invention is not limited to these precise embodiments, and that changes may be made in either without departing from the scope of the invention, which is defined in the appended claims.

## CLAIMS

1.     A shelf-stable emulsion useable for removing ink and accumulated foreign particles from printing press component parts, characterised in that it comprises, by volume, approximately:

50-75% d-limonene,

25-50% water

1-5% surfactant mixture comprising a hydrophilic surfactant and an oleophilic surfactant, and

0.5-2% emulsion stabilizer.

2.     The emulsion claimed in claim 1, characterised in that it further includes an additive selected from the group consisting of rust inhibitors, bactericides, metal affinity agents, ink cutting agents, dyes, fragrances, and combinations thereof.

3.     The emulsion claimed in claim 1 or 2, characterised in that said surfactant mixture comprises approximately 0.5-2.5% of a non-ionic hydrophilic surfactant, and 0.5-2.5% of an oleophilic surfactant.

4.     The emulsion claimed in claim 2, or claim 2 in combination with claim 3, characterised in that said additive includes approximately 0.01-0.1% rust inhibitor, 0.1-2% bactericide, and 0.1-1.0% metal affinity agent.

5.     The emulsion claimed in any preceding claim, characterised in that said d-limonene is present in the amount by volume of 65-75%, and said water is present in the amount by volume of 25-30%, and said surfactant mixture is present in the amount by volume of 1.5-4.0%.

6.     The emulsion claimed in claim 2, or claim 2 in combination with claim 3, 4 or 5, characterised in that said additive is 0.5% bactericide.

7.     A method for cleaning printing ink and accumulated foreign particles from printing press component parts characterised in that it comprises:

applying an emulsion containing approximately 50-75% d-limonene, 25-50% water, 1-5% surfactant mixture comprising a hydrophilic surfactant and an oleophilic surfactant, and 0.5-2% emulsion stabilizer to said printing press component parts to form a residue of used emulsion, removed ink and accumulated foreign particles; removing said residue from said printing press component parts, and disposing of said residue whereby at least a portion of said residue is biodegradable.

8.     The method claimed in claim 7, characterised in that said emulsion further includes an additive selected from the group consisting of rust inhibitors, bactericides, metal affinity agents, ink cutting agents, dyes, fragrances, and combinations thereof.

9.     The method claimed in claim 7 or 8, characterised in that said printing press component parts are parts of relief presses, parts of intaglio presses, or parts of planographic presses.

10.    The method claimed in claim 9, characterised in that said printing press component parts are the blanket or the rollers.

AUSTRIA

CLAIMS

1.    A method of preparing a shelf-stable emulsion useable for removing ink and accumulated foreign particles from printing press component parts, characterised in that it comprises admixing, by volume, approximately:

50-75% d-limonene,

25-50% water

1-5% surfactant mixture comprising a hydrophilic surfactant and an oleophilic surfactant, and

0.5-2% emulsion stabilizer.

2.    The method claimed in claim 1, characterised in that it further includes an additive selected from the group consisting of rust inhibitors, bactericides, metal affinity agents, ink cutting agents, dyes, fragrances, and combinations thereof.

3.    The method claimed in claim 1 or 2, characterised in that said surfactant mixture comprises approximately 0.5-2.5% of a non-ionic hydrophilic surfactant, and 0.5-2.5% of an oleophilic surfactant.

4.    The method claimed in claim 2, or claim 2 in combination with claim 3, characterised in that said additive includes approximately 0.01-0.1% rust inhibitor, 0.1-2% bactericide, and 0.1-1.0% metal affinity agent.

5.    The method claimed in any preceding claim, characterised in that said d-limonene is present in the amount by volume of 65-75%, and said water is present in the amount by volume of 25-30%, and said surfactant mixture is present in the amount by volume of 1.5-4.0%.

6.    The method claimed in claim 2, or claim 2 in combination with claim 3, 4 or 5, characterised in that said additive is 0.5% bactericide.

7.    A method  for cleaning printing ink and accumulated foreign particles from printing press component  parts characterised in that it comprises:

applying an emulsion containing approximately 50-75% d-limonene, 25-50% water, 1-5% surfactant mixture comprising a hydrophilic surfactant and an oleophilic surfactant, and 0.5-2% emulsion stabilizer to said printing press component parts to form a residue of used emulsion, removed ink and accumulated foreign particles; removing said residue from said printing press component parts, and disposing of said residue whereby at least a portion of said residue is biodegradable.

8.    The method claimed in claim 7, characterised in that said emulsion further includes an additive selected from the group consisting of rust inhibitors, bactericides, metal affinity agents, ink cutting agents, dyes, fragrances, and combinations thereof.

9.    The method claimed in claim 7 or 8, characterised in that said printing press component parts are parts of relief presses, parts of intaglio presses, or parts of planographic presses.

10.    The method claimed in claim 9, characterised in that said printing press component parts are the blanket or the rollers.

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A,D | GB-A-1 603 047 (VINCENT DOTOLO)<br>* Claims 1,3 * | 1 | C 09 D 9/04<br>B 41 N 3/06 |
| A | FR-A-2 523 592 (I.F.P.)<br>* Claims 1,2,12-14 * | 1,7 | |
| A | FR-A-2 438 078 (GEORG SCHEIDEL JR.)<br>* Claims 1,2 * | | |

TECHNICAL FIELDS SEARCHED (Int. Cl 4)

C 09 D
B 41 N

The present search report has been drawn up for all claims

| Place of search | Date of completion of the search | Examiner |
|---|---|---|
| THE HAGUE | 09-12-1985 | GIRARD Y.A. |